Europäisches Patentamt

European Patent Office

Office européen des brevets

(19)

(11) Veröffentlichungsnummer: **0 082 411**
**B1**

(12) **EUROPÄISCHE PATENTSCHRIFT**

(45) Veröffentlichungstag der Patentschrift:
**27.03.85**

(21) Anmeldenummer: **82111361.0**

(22) Anmeldetag: **08.12.82**

(51) Int. Cl.⁴: **F 22 B  1/06, G 21 D  3/04,
F 22 B  37/42**

(54) **Dampferzeuger mit abgestufter Überdrucksicherung.**

(30) Priorität: **21.12.81  DE 3150612**

(43) Veröffentlichungstag der Anmeldung:
**29.06.83 Patentblatt 83/26**

(45) Bekanntmachung des Hinweises auf die Patenterteilung:
**27.03.85 Patentblatt 85/13**

(84) Benannte Vertragsstaaten:
**DE FR GB NL**

(56) Entgegenhaltungen:
**FR - A - 1 518 393
FR - A - 2 379 881**

(73) Patentinhaber: **INTERATOM Internationale
Atomreaktorbau GmbH, Friedrich-Ebert-Strasse,
D-5060 Bergisch Gladbach 1 (DE)**

(72) Erfinder: **Dumm, Konrad, Ing. grad., Krombacher
Strasse 33, D-5063 Overath (DE)**

(74) Vertreter: **Mehl, Ernst, Dipl.-Ing. et al, Postfach 22 01 76,
D-8000 München 22 (DE)**

BUNDESDRUCKEREI BERLIN

## Beschreibung

Die Erfindung betrifft einen Dampferzeuger nach dem ersten Teil des Patentanspruchs.

Ein derartiger Dampferzeuger ist insbesondere für eine Kernenergieanlage, in der flüssiges Natrium als Wärmetransportfluid Verwendung findet geeignet. Derartige, bekannte Anlagen sind so aufgebaut, daß in einem Primärkreislauf, der den Kernreaktor einschließt, das Flüssigmetall erhitzt, zugleich aber auch aufaktiviert wird, so daß eine unmittelbare Wärmeabgabe in einem Dampferzeuger aus Sicherheitsgründen vermieden wird. Die Wärmeabgabe erfolgt vielmehr in einem ersten Wärmetauscher an einen ebenfalls mit Natrium betriebenen Sekundärkreislauf, der nicht aufaktiviert wird und seinerseits die Wärme in einem zweiten Wärmetauscher an das zur Dampferzeugung verwendete Wasser abgibt. Undichtigkeiten in diesen Dampferzeugern lassen sich nicht völlig ausschließen und dabei tritt, da das Natrium im Sekundärkreislauf praktisch nur unter dem Pumpendruck, Wasser und Dampf im Tertiärkreislauf jedoch unter hohem Druck stehen, letzteres in das heiße Flüssigmetall über, wobei es bekanntermaßen zu einer heftigen chemischen Reaktion unter Bildung größerer Mengen Wasserstoff und anderer Reaktionsprodukte kommt. Um den Sekundärkreislauf vor größeren Beschädigungen durch den im geschilderten Schadensfall auftretenden erhöhten Druck zu bewahren, ist es bekannt, ihn mit einem Sicherheitsventil zu versehen; wegen der geforderten kurzen Ansprechzeit und großen Ansprechsicherheit zweckmäßigerweise mit einer Berstscheibensicherung der in der DE-C-1 926 706 beschriebenen Art.

Diese gibt beim Öffnen den Weg in einen Zyklon frei, in dem die flüssigen und festen von den gasförmigen Reaktionsprodukten getrennt werden und letztere, da nicht radioaktiv, nach außen aus der Anlage abgegeben werden können. Immerhin führt das Ansprechen der Berstscheibensicherung zum Auftreten von Druckwellen im Sekundärkreislauf die, wie Berechnungen gezeigt haben, empfindlichere Bauteile, wie z. B. Rohrkrümmer, gefährden können. Derartige Teile müßten nach einem Störfall der beschriebenen Art ausgetauscht werden.

Es erscheint daher gerechtfertigt, die Berstscheibensicherung nur zur Absicherung der Anlage bei größeren Störfällen (z. B. dem Abreißen eines Rohres im Dampferzeuger) mit Bildung größerer Mengen von Reaktionsprodukten und entsprechend erheblicher Druckbelastung des Sekundärkreislaufes zu nutzen. Ein solcher Störfall ist extrem unwahrscheinlich. Im Bereich der praktisch zu erwartenden Schadensfälle liegen jedoch zunächst mikroskopisch kleine Leckagen mit einem Durchmesser von einigen hundertstel Millimeter. In einem Zeitraum, dessen Dauer zwischen wenigen Minuten und einigen Monaten liegen kann, weiten sich diese Initialleckagen bedingt durch die korrosive und erosive Wirkung der Natrium-Wasser-Reaktion mit ihrer flammenähnlichen Reaktionszone zu einer Größe von einigen zehntel Millimeter Durchmesser auf. Bleibt der Vorgang sich selbst überlassen, so werden in wenigen Minuten Leckdurchmesser in Millimetergröße erreicht, die sich wiederum in Sekundenschnelle so weit vergrößern können, daß der dann auftretende Druckaufbau nur noch durch das Öffnen eines Berstscheibenventils abgefangen werden kann. Die hier vorzuschlagenden Maßnahmen müssen vor Erreichen dieser Endstufe wirksam werden.

Aufgabe der vorliegenden Erfindung ist eine Absicherung einer Anlage der beschriebenen Art gegen solche kleineren, eher zu erwartenden Störfälle ohne Inkaufnahme der Nachteile, die mit der ausschließlichen Verwendung einer Berstscheibensicherung verbunden sind.

Die Lösung der Aufgabe erfolgt durch die im kennzeichnenden Teil des Patentanspruchs angegebenen Merkmale.

Da das Flüssigmetall im Sekundärkreislauf bei Temperaturschwankungen auch sein Volumen ändert, ist im Sekundärkreislauf ein entsprechend in wechselnder Höhe gefüllter Pufferbehälter vorhanden. Die freie Oberfläche des Natriums in diesem Pufferbehälter und gegebenenfalls auch in der zur Umwälzung verwendeten Pumpe wird durch ein Inertgas abgedeckt. Gegen Fehlfunktionen in der Inertgasversorgung ist der Pufferbehälter mit einem verhältnismäßig kleinen, bereits bei einem niedrigen Druck ansprechenden Sicherheitsventil versehen. Dieses Sicherheitsventil würde nicht ausreichen, um die Abfuhr von Reaktionsprodukten und damit eine Begrenzung des Druckanstiegs selbst bei einer kleinen Natrium/Wasserreaktion im Dampferzeuger sicherzustellen. Dies ermöglicht erst das hier vorgeschlagene zusätzliche Sicherheitsventil, das bei einem etwas höheren Überdruck einen größeren Querschnitt freigibt.

Dieses Sicherheitsventil kann einen geringeren Ansprechdruck aufweisen, als der Druck des Heizmittels im Dampferzeuger selbst. Die Anordnung im Pufferbehälter erlaubt eine weitgehend herkömmliche Bauart und eine hier stattfindende Entlastung verursacht deutlich geringere Druckwellen als eine solche im Dampferzeuger selbst.

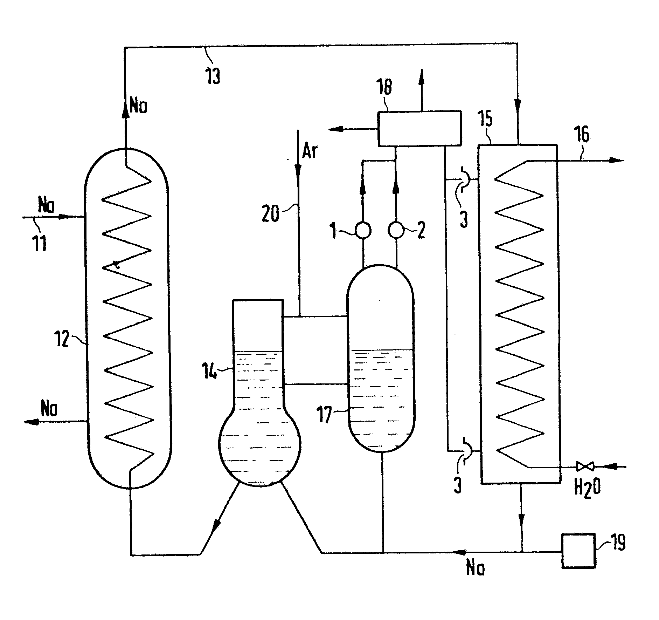

Ein Ausführungsbeispiel der Erfindung ist schematisch in der Zeichnung dargestellt. Das in dem hier nicht dargestellten Kernreaktor erhitzte Natrium strömt in einem Primärkreislauf 11 in einen ersten Wärmetauscher 12, wo es seine Wärme an das in einem Sekundärkreislauf 13 unter einem Druck von z. B. 8 bar zirkulierende Natrium abgibt. Der Kreislauf in diesem wird durch eine Pumpe 14 aufrecht erhalten. In einem zweiten Wärmetauscher (Dampferzeuger) 15 wird das in einem Tertiärkreislauf 16 unter einem Druck von z. B. 162 bar zirkulierende Wasser verdampft und dieser einem hier ebenfalls nicht dargestellten Verwendungsort, z. B. einer Turbine zugeführt. Der Sekundärkreislauf weist ferner einen Pufferbehälter 17 auf, der bis zu entsprechend den Temperaturverhältnissen wechselnden Höhen mit Natrium gefüllt ist; der dann verbleibende Raum ist ebenso wie ein etwa in der Pumpe 14 vorhandener mit einem Inertgas, z. B. Argon gefüllt, das aus einer beliebigen Versorgungseinrichtung über eine Leitung 20 herangeführt wird. Gegen einen infolge Fehlfunktionen auftretenden Überdruck des Argons ist der Pufferbehälter 17 durch ein erstes Ventil 1 abgesichert, das beispielsweise bei einem Druck $P_1$ von 4,8 bar öffnet und das überschüssige Gas abbläst. Hierzu braucht das Ventil 1 nur einen geringen Querschnitt aufzuweisen. Tritt im Dampferzeuger 15 eine Leckage auf, so tritt Wasser bzw. Dampf wegen des im Tertiärkreislauf 16 herrschenden Überdrucks in das Natrium über, wobei es zu einer heftigen chemischen Reaktion unter Gasentwicklung kommt. Die so gebildete Wasserstoffblase verdrängt Natrium aus dem Dampferzeuger 15; reicht das freie Volumen des Pufferbehälters 17 zur Aufnahme nicht aus, öffnet zunächst beispielsweise bei einem Druck $P_2$ von 6 bar ein zweites Sicherheitsventil 2 mit größerem Querschnitt, durch das das verdrängte Natrium bzw. die Reaktionsprodukte in einen Zyklon 20 geführt werden. Hier findet eine Trennung der flüssigen und festen von den gasförmigen Stoffen statt und erstere werden hier nicht gezeigten Auffangbehältern zugeführt, während letztere unter Umständen an die Atmosphäre abgegeben werden können. Ansprechdruck und Querschnitt des zweiten Sicherheitsventils 2 sind so gewählt, daß sie zur Beherrschung kleinerer Leckagen im Dampferzeuger 15 ausreichen. Ehe sich dort solche zunächst punktförmigen Lecks zu gefährlicher Größe entwickeln können, ist das Vorhandensein von Wasserstoff im Natrium durch geeignete Nachweisgeräte 19 festgestellt worden; die Zufuhr von Speisewasser in den Dampferzeuger 15 wird dann unterbrochen und derselbe kann gefahrlos ausdampfen, da zugleich die Wärmezufuhr in den Sekundärkreislauf 13 durch Unterbrechen des Primärkreislaufes 11 unterbrochen wird. Die weitere Wärmeabfuhr aus dem Reaktor erfolgt dann durch andere, mit dem hier gezeigten identische und parallel zu ihm geschaltete Kreisläufe. Nur im Falle eines plötzlich auftretenden größeren Lecks im Dampferzeuger 15 und entsprechender Freisetzung größerer Mengen von Reaktionsprodukten steigt der Druck im Sekundärkreislauf 13 so stark an, daß das zweite Sicherheitsventil 2 zur Absicherung nicht mehr ausreicht. In diesem Falle tritt bei einem Druck $P_3$ von z. B. 18 bar ein drittes Sicherheitsventil 3 in Tätigkeit, das zweckmäßigerweise als Berstscheibensicherung ausgeführt ist, einen noch größeren Querschnitt freigibt und die Reaktionsprodukte ebenfalls in den Zyklon 20 führt.

## Patentanspruch

Dampferzeuger (15) mit einem exotherm mit Wasser reagierenden flüssigen Heizmittel, das in einem Kreislauf (13) zirkuliert, der einen teilweise mit Gas gefüllten Pufferbehälter (17) einschließt, der mit einem bei einem Druck $P_1$ ansprechenden Sicherheitsventil (1) versehen ist, wobei der Kreislauf (13) ferner eine bei einem Druck $P_3$ ansprechende Berstscheibensicherung (3) aufweist, dadurch gekennzeichnet, daß der Pufferbehälter (17) über dem Gasraum mit einem weiteren Sicherheitsventil (2) versehen ist, das bei einem Druck $P_2$ anspricht, der höher als der Druck $P_1$, jedoch niedriger als der Druck $P_3$ ist.

## Claim

A steam generator (15) having a liquid heating means which reacts exothermically with water and which circulates in a cycle (13) which includes a buffer container (17) which is partially filled with gas and is provided with a safety valve (1) which responds at a pressure $P_1$, the cycle (13) also including a bursting disc safety device (3) which responds at a pressure $P_3$, characterised in that the buffer container (17) is provided above the gas space with a further safety valve (2) which responds at a pressure $P_2$ which is higher than the pressure $P_1$ but lower than the pressure $P_3$.

## Revendication

Générateur de vapeur (15) à agent caloporteur liquide qui réagit exothermiquement sur l'eau et qui circule dans un circuit (13) incluant un récipient-tampon (17) empli partiellement de gaz et muni d'une soupape de sûreté (1) qui répond à une pression $P_1$, le circuit (13) comportant en outre un dispositif de sécurité à disque de rupture (3), caractérisé en ce que le récipient-tampon (17) est muni au-dessus de l'espace occupé par le gaz d'une autre soupape de sûreté qui répond à une pression $P_2$ supérieure à la pression $P_1$, mais inférieure à la pression $P_3$.